# EUROPEAN PATENT SPECIFICATION

(11) **EP 1 584 713 B1**
(45) Date of publication and mention of the grant of the patent: **09.06.2010**
(21) Application number: 04702405.4
(22) Date of filing: 15.01.2004
(51) Int. Cl.: D01F 9/24, C01B 31/02, H01M 4/96, H01M 8/02

(54) **METHOD FOR PRODUCING CARBON FIBER, CATALYST STRUCTURE AND MEMBRANE ELECTRODE JUNCTION BODY FOR SOLID POLYMER FUEL CELL**
VERFAHREN ZUR HERSTELLUNG EINER CARBONFASER, KATALYSATORKONSTRUKTION SOWIE MEMBRANELEKTRODENVERBUNDKÖRPER FÜR FESTPOLYMER-BRENNSTOFFZELLE
PROCEDE DE PRODUCTION DE FIBRE DE CARBONE, STRUCTURE DE CATALYSEUR ET CORPS DE JOINT D'ELECTRODE A MEMBRANE POUR PILE A COMBUSTIBLE DE TYPE POLYMERE SOLIDE

(30) Priority: 15.01.2003 JP 2003006795; 23.06.2003 JP 2003177703
(43) Date of publication of application: 12.10.2005
(73) Proprietor: Bridgestone Corporation, Tokyo 104-8340 (JP)
(72) Inventor: Toyosawa, Shinichi; c/o Bridgestone Corporation, Kodaira-shi Tokyo 187-8531 (JP); Iizuka, Munenori c/o Bridgestone Corporation, Kodaira-shi Tokyo 187-8531 (JP)
(74) Representative: Whalley, Kevin
(86) International application number: PCT/JP2004/000227
(87) International publication number: WO 2004/063438

(56) References cited:
- WO-A1-95/21465
- GB-A- 1 547 162
- GB-A- 1 547 162
- JP-A- 04 141 233
- JP-A- 04 321 509
- JP-A- 06 172 028
- JP-A- 08 165 111
- US-A- 5 766 445

## Description

This invention relates to a method of producing carbon fibers, a catalyst structure using the carbon fibers obtained by this method, a membrane electrode assembly for a solid polymer fuel cell using the catalyst structure, and a solid polymer fuel cell provided with the membrane electrode assembly; and more particularly to a method of producing fibril-shaped carbon fibers, which have high residual carbon ratio and excellent electric conduction and are suitable as a carrier or the like for a filler, and a noble metal catalyst combined with an electrode material, a polymer or the like to provide a reinforcement and a functionality, and a catalyst structure improving a utility ratio of the noble metal catalyst to be supported.

As the carbon fibers there have hitherto been known pitch-based carbon fibers obtained by liquid phase carbonization, polyacrylonitrile- and rayon-based carbon fibers obtained by solid phase carbonization, vapor-growth carbon fibers obtained by vapor phase carbonization, carbon nanotubes obtained by laser process or arc discharge process, and the like. In the production steps of the pitch-based carbon fiber, polyacrylonitrile-based carbon fiber and rayon-based carbon fiber, it is necessary to take a spinning step for obtaining a fibrous precursor, so that the production steps become complicated and it is difficult to obtain fibers having a size finer than 1 µm. In the production of the vapor-growth carbon fiber, there is a problem that it is not necessarily possible to establish a mass production process because the production instrument is expensive and the yield is not high. Even in the production of the carbon nanotubes, the production instrument is expensive and an efficient mass production technique is uncertain and there is a problem that it is difficult to obtain fibers having a size of more than 0.1 µm.

On the contrary, JP-A-5-178603 discloses a production method of carbonaceous powder without requiring an infusion step wherein it is possible to control the electric characteristics such as electric conductivity and the like and the residual carbon ratio is high and the electric conduction is excellent. In this method, however, polyaniline powder is used as a starting material, so that the carbon fiber is never obtained without a spinning step.

Lately, fuel cells are required to have a high power generation efficiency and a small environmental burden. Among the fuel cells, solid polymer fuel cells have high power density and low working temperature and are easy to miniaturize and cost reduction is possible as compared with other types of fuel cells, so that they are expected to become widely used as a power source for electric cars, dispersion power generation systems and household cogeneration systems.

In general, the solid polymer fuel cell comprises a membrane electrode assembly in which catalyst layers having a noble metal catalyst are arranged on both faces of a solid polymer electrolyte film and a carbon paper, carbon cloth or the like is disposed on an outside of the catalyst layer as a gas diffusing layer. Furthermore, an electrically conductive separator provided with gas flowing channels is disposed on the outside of the diffusing layer. Such a separator plays a role for passing a fuel gas or an oxidizer gas and for conducting a current from the gas diffusing layer having a function of current collector to take out electric energy.

Heretofore, the catalyst layer mainly comprises a catalyst structure formed by supporting a noble metal catalyst on granular carbon and a polymer electrolyte, and is prepared by forming a paste or a slurry of a catalyst structure, a polymer electrolyte and an organic solvent on a carbon paper or the like through a screen printing process, a deposition process, a spraying process or the like, or by forming the paste or slurry on a previously provided substrate in the form of a sheet and then transferring onto the solid polymer electrolyte membrane through hot pressing or the like. The polymer electrolyte included in the catalyst layer has a function of dissolving hydrogen diffused from the gas diffusion layer, and a polymer having an excellent ion conduction such as ion exchange resin or the like is usually used (edited by The Chemical Society of Japan, "Chemical review No. 49, Material Chemistry of New Type Cells", Institute Publishing Center, 2001, p.180-182; "Solid Polymer Fuel Cells <2001>", The Technical Information Society, 2001, p.14-15).

The catalyst structure is formed by supporting a noble metal on nano-porous granular carbon having pores such as meso-pores or the like. However, the polymer electrolyte can not penetrate into these pores, and hence the noble metal supported in the pores can not contact with the polymer electrolyte. As a result, in the conventional catalyst structure using the granular carbon as a carrier, there is a problem that the utility ratio of the noble metal is considerably low.

Also, hydrogen as a fuel is dissociated into proton and electron on the noble metal and the resulting electron must be moved through carbon to the diffusing layer functioning as a current collector. As a result, there is a problem that the noble metal supported on the carbon being insufficient in the contact between carbons and having no electrical continuity to the current collector is not effectively utilized and hence the dissociation of hydrogen does not proceed sufficiently. Attention is also drawn to the disclosures of US-5 766 445 A and GB-1 547 162 A.

It is, therefore, an object of the invention to solve the problems of the conventional techniques and to provide a method of producing carbon fibers wherein a spinning step and infusion step are not required and the residual carbon ratio is high and the electric conduction is excellent and carbon fibers having a fiber size of 30 to few hundreds nm can be obtained efficiently and it is possible to control the electric characteristics such as electric conductivity of the resulting carbon fiber and the like.

Also, it is another object of the invention to provide a catalyst structure improving the utility ratio of a noble metal catalyst, a membrane electrode assembly for a solid polymer fuel cell using the same, and a solid polymer fuel cell provided therewith.

The inventors have made various studies in order to achieve the above objects, and found that carbon fibers capable of controlling the electric characteristics such as electric conductivity and the like and having high residual carbon ratio and excellent electric conduction and having a fiber size of 30 to few hundred nm can be efficiently produced by using a fibril-shaped polymer made from a compound having an aromatic ring as a starting material without requiring a spinning step and an infusion step.

Further, the inventors have found that a noble metal can be carried on only the surface of the carbon fiber by supporting a noble metal catalyst on the carbon fiber and the utility ratio of the noble metal can be improved because the carbon fiber is three-dimensionally continuous and has excellent electric conduction.

That is, the production method of the carbon fiber according to the invention is characterized in that a compound having an aromatic ring in the presence of an acid is oxidative-polymerized to obtain a fibril-shaped polymer and then the fibril-shaped polymer is fired in a non-oxidizing atmosphere.

In a preferable embodiment of the production method of the carbon fiber according to the invention, the compound having the aromatic ring is a compound having a benzene ring or an aromatic heterocyclic ring. In this case, the compound having the aromatic ring is particularly preferable to be at least one compound selected from the group consisting of aniline, pyrrole, thiophene and derivatives thereof.

In another preferable embodiment of the production method of the carbon fiber according to the invention, the oxidative-polymerization is an electrolytic oxidative-polymerization.

Also, the catalyst structure according to the invention is characterized in that fine particles of a noble metal are supported on the carbon fibers produced by the above method. That is, the catalyst structure according to the invention comprises the noble metal as a catalyst and the carbon fibers as a carrier in which the carbon fibers are three-dimensionally continuous.

In a preferable embodiment of the catalyst structure according to the invention, the fine particles of the noble metal are supported on the carbon fibers through an electroplating.

In another preferable embodiment of the catalyst structure according to the invention, the noble metal includes at least Pt.

Furthermore, the membrane electrode assembly (MEA) for a solid polymer fuel cell according to the invention is a membrane electrode assembly comprising a solid polymer electrolyte membrane, catalyst layers arranged on both sides of the solid polymer electrolyte membrane, and a diffusing layer arranged on one side of the catalyst layer, characterized in that the catalyst layer comprises the above catalyst structure and a polymer electrolyte.

Moreover, the solid polymer fuel cell according to the invention is characterized by providing the above membrane electrode assembly.

In the accompanying drawings:

FIG. 1 is a SEM photograph of a fibril-shaped polyaniline produced in Example 1 (before firing).

FIG. 2 is a SEM photograph of carbon fibers produced in Example 1 (after firing).

FIG. 3 is a SEM photograph of three-dimensionally continuous carbon fibers produced in Example 3.

FIG. 4 is a SEM photograph three-dimensionally continuous carbon fibers supported with platinum (catalyst structure) prepared in Example 3.

FIG. 5 is a graph showing voltage-current characteristics of solid polymer fuel cells of Example 3 and Comparative Example 2.

The invention will be described in detail below.

### <Production method of carbon fibers>

The production method of carbon fibers according to the invention is characterized by (i) oxidative-polymerizing a compound having an aromatic ring to obtain a fibril-shaped polymer and (ii) firing the fibril-shaped polymer in a non-oxidizing atmosphere. In the production method of carbon fibers according to the invention, a spinning step and an infusion step are not required, so that the number of steps is small and the productivity is excellent and the cost becomes cheap.

As the compound having the aromatic ring used in the production method of carbon fibers according to the invention may be mentioned compounds having a benzene ring and compounds having an aromatic heterocyclic ring. The compounds having the benzene ring are preferably aniline and aniline derivatives. The compounds having the aromatic heterocyclic ring are preferably pyrrole, thiophene and derivatives thereof. These compounds having the aromatic ring may be used alone or in a combination of two or more.

In the production method of carbon fibers according to the invention, the compound having the aromatic ring is oxidative-polymerized to obtain a fibril-shaped polymer. The fibril-shaped polymer has a diameter of 30 to few hundred nm, preferably 40-500 nm and a length of 0.5-100000 µm, preferably 1-10000 µm.

As the oxidative-polymerization are mentioned an electrolytic oxidative-polymerization method and a chemical oxidative-polymerization method, but the electrolytic oxidative-polymerization method is preferable. In the oxidative-polymerization, the compound having the aromatic ring as a starting material is used in the presence of an acid. In this case, a negative ion of the acid is incorporated into the synthesized fibril-shaped polymer as a dopant to provide a fibril-shaped polymer having an excellent electric conduction, and finally the electric conduction of the carbon fiber can be further improved by using such a fibril-shaped polymer.

This is further described in detail. For example, when aniline is used as a starting polymerization material, a polyaniline obtained by oxidative-polymerizing aniline in the presence of HBF₄ is usually existent at a state of mixing four kinds of polyanilines represented by the following formulae (A)-(D): 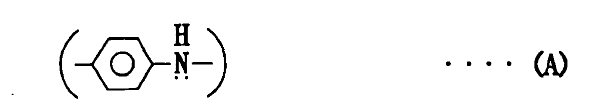 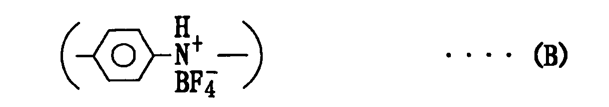 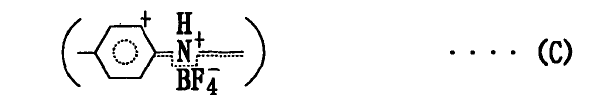 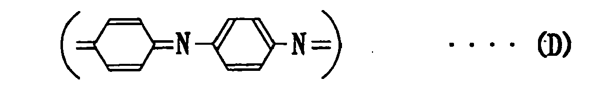 , that is, a mixed state of a benzonoid=amine state (formula A), a benzonoid=ammonium state (formual B), a dope=semiquinone radical state (formula C) and a quinoid=diimine state (formula D). In this case, the mixing ratio of these states is not particularly limited, but the residual carbon ratio and electric conductivity of the finally obtained carbon fiber become high in the state containing a greater part of the dope=semiquinone radical state (formula C) as compared with the state containing a greater part of the quinoid=diimine state (formula D). Therefore, in order to obtain polyaniline containing a greater part of the dope=semiquinone radical state (formula C), the polymerization is in the presence of the acid. Moreover, the acid in the polymerization is not limited to HBF₄, but various acids can be used. In addition to HBF₄ can be exemplified H₂SO₄, HCl, HClO₄ and the like. In this case, the concentration of the acid is preferably 0.1-3 mol/L, more preferably 0.5-2.5 mol/L.

The mixing ratio (doping level) of the dope=semiquinone radical state (formula C) can be adjusted properly. By adjusting such a mixing ratio (doping level) there can be controlled the residual carbon ratio and electric conductivity of the resulting carbon fiber. As the doping level is made higher, the residual carbon ratio and electric conductivity of the resulting carbon fiber become high. Moreover, the mixing ratio (doping level) of the dope=semiquinone radical state (formula C) is not particularly limited, but is preferably within a range of 0.01-50%.

In case of obtaining the fibril-shaped polymer through the electrolytic oxidative-polymerization, a pair of electrode plates as a working electrode and a counter electrode are immersed in a solution containing the compound having the aromatic ring, and then a voltage of not less than an oxidation potential of the compound having the aromatic ring is applied between both the electrodes or a current capable of ensuring a voltage enough to polymerize the compound having the aromatic ring is passed, whereby the fibril-shaped polymer is formed on the working electrode. As one example of the method of synthesizing the fibril-shaped polymer through the electrolytic oxidative-polymerization, there is exemplified a method wherein plates or porous materials made from a good conductive substance such as stainless steel, platinum, carbon or the like are used as the working electrode and the counter electrode, and immersed in an electrolyte solution containing an acid such as H₂SO₄, HBF₄ or the like and a compound having an aromatic ring, and then a current of 0.1-1000 mA/cm², preferably 0.2-100 mA/cm² is passed between both the electrodes to precipitate a fibril-shaped polymer on the working electrode. In this case, the concentration of the compound having the aromatic ring in the electrolyte solution is preferably 0.05-3 mol/L, more preferably 0.25-1.5 mol/L. To the electrolyte solution may be properly added a soluble salt or the like for adjusting pH in addition to the above components.

As mentioned above, the electric conductivity and residual carbon ratio of the resulting carbon fiber can be controlled by adjusting the doping level of the carbon fiber, but the method of adjusting the doping level is not particularly limited as long as the resulting fibril-shaped polymer is subjected to a reduction treatment through any process. As examples, there are mentioned a method of immersing in an aqueous solution of ammonia or an aqueous solution of hydrazine, a method of electrochemically applying a reduction current, and the like. The control of the dopant quantity included in the fibril-shaped polymer can be carried out by the reduction level, in which the dopant quantity in the fibril-shaped polymer is decreased by the reduction treatment. Also, the doping level can be adjusted to a certain extent by controlling the acid concentration in the polymerization stage, but it is difficult to obtain various samples having largely different doping levels, so that the above reduction method is preferably used. Moreover, the dopant having the thus adjusted content is kept in the carbon fibers obtained by controlling the firing conditions even after the firing as mentioned later, whereby the electric conductivity and residual carbon ratio of the carbon fiber are controlled.

The fibril-shaped polymer obtained on the working electrode is washed with water or a solvent such as an organic solvent or the like, dried and carbonized by firing in a non-oxidizing atmosphere to obtain fibril-shaped, three-dimensionally continuous carbon fibers. The drying method is not particularly limited, but there can be exemplified air-drying, vacuum drying and a method using a fluidized bed drying device, flash drier, spray drier or the like. Also, the firing conditions are not particularly limited, but may be set so as to provide an optimum electric conductivity in accordance with the application of the carbon fiber. Particularly, in case of requiring high electric conductivity, it is preferable that the temperature is 500-3000°C, more preferably 600-2800°C and the time is 0.5-6 hours. Moreover, as the non-oxidizing atmosphere may be mentioned an inert gas atmosphere such as a nitrogen atmosphere, an argon atmosphere, a helium atmosphere or the like, and in some cases there may be used a hydrogen atmosphere.

The carbon fibers obtained by the method of the invention have a diameter of 30 to few hundred nm, preferably 40-500 nm, a length of 0.5-100000 µm, preferably 1-10000 µm, and a surface resistance of 10⁶-10⁻² Ω, preferably 10⁴-10⁻² Ω. Also, the carbon fibers have a residual carbon ratio of 95-30%, preferably 90-40%. The carbon fibers have high electric conduction as compared with granular carbon because the carbon as a whole has a three-dimensionally continuous structure.

### <Catalyst structure>

The catalyst structure according to the invention is characterized by supporting fine particles of a noble metal on the carbon fibers produced by the above method. The carbon fiber has an excellent contacting property with a polymer electrolyte because fine particles of the noble metal precipitate on surface portions of the carbon fibers capable of permeating the polymer electrolyte. Therefore, the fine particles of the noble metal supported on the carbon fibers have high contacting ratio with the polymer electrolyte as compared with the conventional one. Also, the carbon fibers have high electric conduction as compared with granular carbon because they are three-dimensionally continuous. For these reasons, the catalyst structure according to the invention has a considerably low ratio of (i) noble metal not contacting with the polymer electrolyte and (ii) noble metal supported on the isolated carrier not electrically conducting to the current collector as compared with the conventional catalyst structure, so that the utility ratio of the noble metal is highly improved. Moreover, the catalyst structure according to the invention is effective as a catalyst for various chemical reactions, but can be preferably used in a catalyst layer for a solid polymer fuel cell.

The noble metal used in the catalyst structure according to the invention is particularly preferably Pt. In the invention, Pt may be used alone or may be used as an alloy with another metal such as Ru or the like. By using Pt as a noble metal hydrogen can be oxidized in a high efficiency even at a low temperature of not higher than 100°C. By using the alloy of Pt with Ru or the like there can be prevented the poisoning of Pt with CO to prevent lowering of the catalyst activity. Moreover, the particle size of the fine particles of the noble metal supported on the carbon fibers is preferably within a range of 0.5-20 nm, and the supporting ratio of the noble metal is preferably within a range of 0.05-5 g per 1 g of the carbon fibers.

As the method of supporting the noble metal on the carbon fibers are mentioned an impregnation method, an electroplating method (electroreduction method), an electroless plating method and the like, but the electroplating method is preferable in that the adjustment of the ratio of the noble metal supported is easy. In the electroplating method, the noble metal is electrochemically precipitated from a solution dissolving a target noble metal such as aqueous solution of chloroplatinate, whereby the noble metal can be precipitated on only the surface of the carbon fiber and the precipitating amount can be accurately controlled by an electric charge amount applied. In this case, the particle size, form, adhesion state and the like of the fine particles of the noble metal precipitated can be changed by properly selecting the current applying conditions (current density, direct current process or pulse process, temperature, concentration of noble metal ion, kind of co-existing ion and the like).

### <Membrane electrode assembly for solid polymer fuel cell>

The membrane electrode assembly (MEA) for the solid polymer fuel cell according to the invention comprises a solid polymer electrolyte film, a catalyst layer arranged on each side of the solid polymer electrolyte film and a diffusing layer arranged on one side of the catalyst layer, in which the catalyst layer comprises the aforementioned catalyst structure and a polymer electrolyte. In the membrane electrode assembly, the amount of the noble metal in the catalyst layer can be considerably decreased as compared with the conventional one. In the membrane electrode assembly according to the invention, therefore, the cost becomes largely cheap as compared with the conventional one.

In the solid polymer electrolyte film can be used an ion-conductive polymer. As the ion-conductive polymer may be mentioned a polymer having an ion exchanging group such as sulfonic acid, carboxylic acid, phosphonic acid, phosphonous acid or the like, in which the polymer may contain or may not contain fluorine. As the ion-conductive polymer are mentioned perfluorocarbon sulfonic acid based polymers and the like such as Naphion (registered trade mark) and so on.

The catalyst layer comprises the catalyst structure and the polymer electrolyte. As the polymer electrolyte can be used the ion-conductive polymer used in the solid polymer electrolyte film. The thickness of the catalyst layer is not particularly limited, but is preferably within a range of 0.1-100 µm. The ratio of the catalyst structure and the polymer electrolyte in the catalyst layer is preferably within a range that the polymer electrolyte is 10-500 parts by mass per 100 parts by mass of the catalyst structure. Also, the supporting amount of the noble metal in the catalyst layer is determined by the supporting ratio and the thickness of the catalyst layer, and is preferably within a range of 0.001-0.8 mg/cm².

The diffusing layer is a layer for feeding a hydrogen gas or an oxidizer gas such as oxygen, air or the like to the catalyst layer to give and receive the resulting electron, and also plays a role as a current collector. The material used in the diffusing layer is not particularly limited as long as it is porous and has an electron conduction, and includes porous carbon cloth, carbon paper and the like.

The membrane electrode assembly according to the invention is not particularly limited, but can be produced by forming fibril-shaped carbon fibers on a diffusing layer made of a carbon paper or the like, supporting fine particles of a noble metal such as platinum or the like on the carbon fibers through an electroplating or the like, applying a solution containing a polymer electrolyte such as Naphion (registered trade mark) or the like to the noble metal supported carbon fibers to form a catalyst layer, sandwiching the solid polymer electrolyte film made of Naphion or the like between the catalyst layers and subjecting to a heating treatment. In this case, the step of applying the catalyst structure can be omitted.

### <Solid polymer fuel cell>

Further, the solid polymer fuel cell according to the invention is characterized by providing the above membrane electrode assembly. The solid polymer fuel cell of the invention is not particularly limited in addition to the provision of the membrane electrode assembly, and can be produced likewise the conventional solid polymer fuel cell. The solid polymer fuel cell according to the invention has merits that the utility ratio of the noble metal such as Pt or the like used in the catalyst layer is high, and the use amount thereof is less and the cost becomes cheap.

The following examples are given in illustration of the invention and are not intended as limitations thereof.

### Example 1

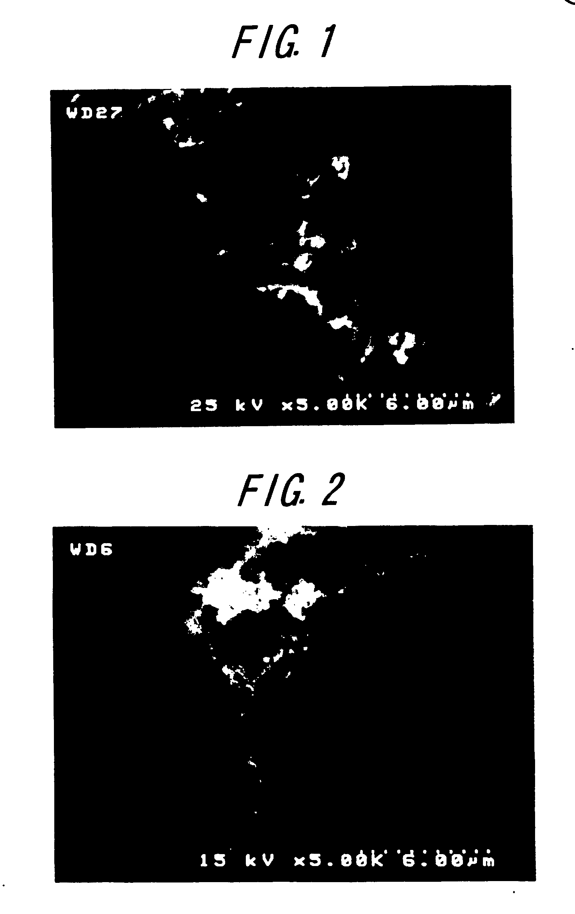

A working electrode made of a platinum plate is placed in an acidic aqueous solution containing 1.0 mol/L of aniline monomer and 2.0 mol/L of HBF₄, and a platinum plate is used as a counter electrode, and electrolytic polymerization is carried out at room temperature and a constant current of 25 mA/cm² for 30 minutes to electrodeposit polyaniline on the working electrode. The resulting polyaniline film is sufficiently washed with an ion exchanged water and air-dried over a day and further dried under vacuum for 24 hours to obtain polyaniline. As observed through SEM, it is confirmed to obtain polyaniline fibrils having a diameter of 100-200 nm at an entangled state. A photograph thereof is shown in FIG. 1. At top right and bottom left of the photograph are shown the polyaniline fibrils according to the invention.

The polyaniline is subjected to a firing treatment by heating up to 1200°C at a temperature rising rate of 2.5°C/min in an Ar atmosphere and then keeping at 1200°C for 1 hour. As the fired product is observed through SEM, it is confirmed that the diameter is 100-200 nm, and carbon fibers having substantially the same form as that before the firing treatment are obtained. A photograph thereof is shown in FIG. 2. At bottom right and bottom left of this photograph is shown the fibril-shaped carbon fiber according to the invention.

### Example 2

A working electrode made of a carbon paper (made by Toray Industries, Inc.) is placed in an acidic aqueous solution containing 0.5 mol/L of aniline monomer and 1.0 mol/L of HBF₄, and a platinum plate is used as a counter electrode, and electrolytic polymerization is carried out at room temperature and a constant current of 10 mA/cm² for 2 minutes to electrodeposit polyaniline on the working electrode. The resulting polyaniline is washed with an ion exchanged water and dried under vacuum for 24 hours. As observed through SEM, it is confirmed that fibril-shaped polyaniline having a diameter of 50-100 nm is obtained on carbon fibers constituting the carbon paper.

The polyaniline is subjected to a firing treatment by heating up to 900°C at a temperature rising rate of 3°C/min in an Ar atmosphere and then keeping at 900°C for 1 hour. As the fired product is observed through SEM, it is confirmed that carbon fibers having a diameter of 40-100 nm are obtained on the carbon paper.

### Comparative Example 1

Phenol beads (UA-30) are used as a starting material and subjected to a firing treatment by heating up to 800°C at a temperature rising rate of 3°C/min in a nitrogen atmosphere and then keeping at 800°C for 1 hour, and then the resulting carbon material (fired product) is pulverized to obtain carbonaceous powder.

With respect to the thus obtained carbon fibers and carbonaceous powder, the residual carbon ratio is measured. Also, each of the carbon fibers and carbonaceous powder is press-shaped into pellets and then the surface resistance is measured by a surface resistance meter (Loresta IP or Hiresta IP, made by Mitsubishi Yuka Co., Ltd.).

**Table 1**

| | Residual carbon ratio (%) | Surface resistance (Ω) |
|---|---|---|
| Example 1 | 65 | 0.2 |
| Example 2 | 70 | 1.0 |
| Comparative Example 1 | 40 | 1 × 10² |

As seen from Table 1, the carbon fibers of the examples have excellent electric conduction because the residual carbon ratio is high and the surface resistance is low as compared with those of the comparative example.

### Example 3

A working electrode made of a carbon paper (made by Toray Industries, Inc.) is placed in an acidic aqueous solution containing 0.5 mol/L of aniline monomer and 1.0 mol/L of HBF₄, and a platinum plate is used as a counter electrode, and electrolytic polymerization is carried out at room temperature and a constant current of 10 mA/cm² for 10 minutes to electrodeposit polyaniline on the working electrode. The resulting polyaniline is washed with an ion exchanged water and dried under vacuum for 24 hours. As observed through SEM, it is confirmed that fibril-shaped polyaniline having a diameter of 50-100 nm is obtained on a side of the carbon paper facing to the platinum plate.

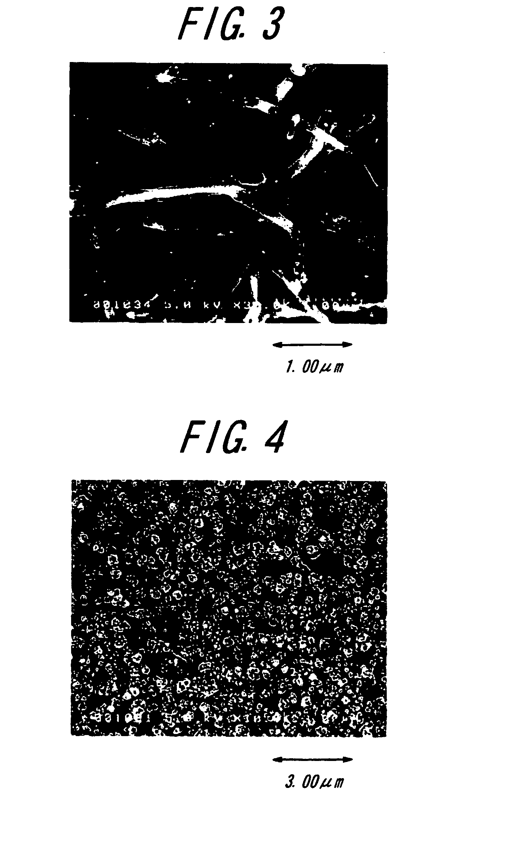

The polyaniline is subjected together with the carbon paper to a firing treatment by heating up to 950°C at a temperature rising rate of 3°C/min in an Ar atmosphere and then keeping at 950°C for 1 hour. As the fired product is observed through SEM, it is confirmed that fibril-shaped three-dimensionally continuous carbon fibers having a diameter of 40-100 nm are formed on the carbon paper. A SEM photograph of the resulting carbon fibers is shown in FIG. 3. Moreover, the carbon fibers have a residual carbon ratio of 45% and a surface resistance of 1.0 Ω (measured through Loresta IP or Hiresta IP made by Mitsubishi Yuka Co., Ltd.).

The carbon paper having the carbon fibers on its surface is placed in an aqueous solution of 3% by mass of chloroplatinate as a working electrode, and a platinum plate is used as a counter electrode, and the electroplating (electrolytic reduction) is carried out at a room temperature and a constant current of 30 mA/cm² for 25 seconds to precipitate platinum on the carbon fibers, whereby a catalyst structure having a platinum supporting amount of 0.4 mg/cm² is formed on the carbon paper. In this case, the working electrode and the platinum plate are arranged so that a face of the carbon fibers adhered to the carbon paper is faced to the platinum plate. A SEM photograph of the carbon fibers supported with platinum is shown in FIG. 4.

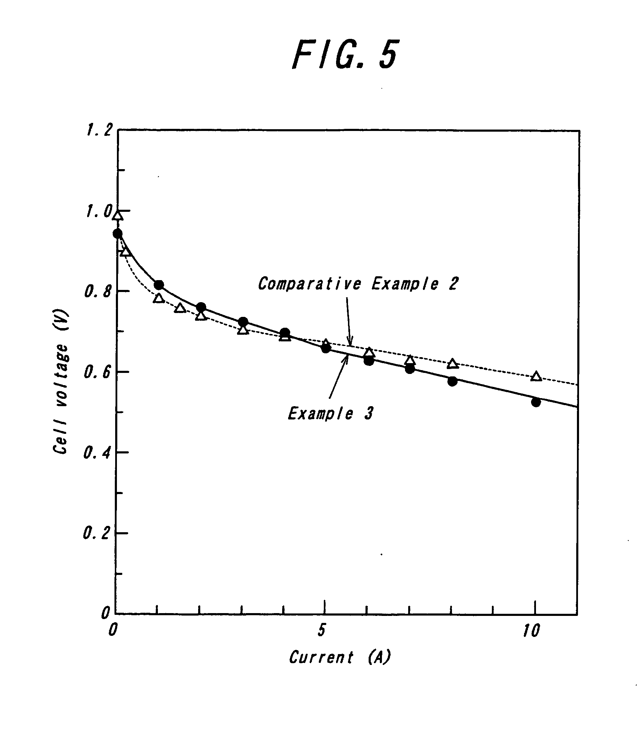

A solution of 5% by mass of Naphion (registered trade mark) is applied to the catalyst structure formed on the carbon paper and dried to form a catalyst layer on the carbon paper. Then, the carbon paper provided with the catalyst layer is arranged so as to contact the catalyst layer with each face of a solid polymer electrolyte film made of Naphion (registered trade mark) (film thickness: 175 µm), which are hot-pressed to prepare a membrane electrode assembly (MEA). In the thus obtained membrane electrode assembly, the thickness of the catalyst layer is 10 µm, and a ratio of catalyst structure/Naphion (by mass) is 4/1. The membrane electrode assembly is incorporated into a test cell made of Electro Chemical Co., Ltd. (EFC25-01SP) to prepare a fuel cell. The voltage-current characteristic of the fuel cell is measured under conditions that H₂ flow rate is 300 cm³/min, O₂ flow rate is 300 cm³/min, cell temperature is 80°C and humidity temperature is 80°C. The result is shown in FIG. 5.

### Comparative Example 2

A fuel cell is prepared in the same manner as in Example 3 except that MEA made by Electro Chemical Co., Ltd. (solid polymer electrolyte film: Naphion film, film thickness: 130 µm, carrier: granular carbon, platinum supporting ratio: 20% by mass, platinum supporting amount: 1 mg/cm²) is used, and the voltage-current characteristic thereof is measured. The result is shown in FIG. 5.

As seen from FIG. 5, the solid polymer fuel cell according to the invention shows the cell characteristic equal to that of the conventional one even if the platinum supporting amount is largely decreased, and the utility ratio of platinum is highly improved. Particularly, it is considered that since the solid polymer fuel cell according to the invention is high in the cell voltage at a low current side, the activation polarization is small and the voltage drop resulted from the chemical reaction at the catalyst layer is small.

According to the invention, carbon fibers having a high residual carbon ratio, an excellent electric conduction and a fiber size of 30 to few hundred nm can be obtained efficiently without requiring a spinning step and an infusion step, and there can be provided a method of producing carbon fibers capable of controlling the electric characteristics of the resulting carbon body such as electric conductivity and the like.

Also, according to the invention can be provided a catalyst structure in which the utility ratio of the noble metal is largely improved as compared with the conventional one by supporting the noble metal catalyst on fibril-shaped three-dimensionally continuous carbon fibers. Further, there can be provided a cheap membrane electrode assembly using such a catalyst structure and a cheap solid polymer fuel cell provided with such a membrane electrode assembly.

## Claims

1. A method of producing carbon fibers which comprises oxidative-polymerizing a compound having an aromatic ring in the presence of an acid to obtain a fibril-shaped polymer and firing the fibril-shaped polymer in a non-oxidizing atmosphere.

2. A method of producing carbon fibers as claimed in claim 1, wherein the compound having the aromatic ring is a compound having a benzene ring or an aromatic heterocyclic ring.

3. A method of producing carbon fibers as claimed in claim 2, wherein the compound having the aromatic ring is at least one compound selected from the group consisting of aniline, pyrrole, thiophene and derivatives thereof.

4. A method of producing carbon fibers as claimed in any of claims 1 to 3, wherein the oxidative-polymerization is an electrolytic oxidative-polymerization.

5. A method of producing carbon fibers as claimed in any of claims 1 to 4, wherein the acid is at least one selected from HBF₄, H₂SO₄, HCl and HC10₄.

6. A catalyst structure **characterized by** supporting fine particles of a noble metal on the carbon fibers produced by a method as claimed in any of claims 1 to 5.

7. A catalyst structure as claimed in claim 6, wherein the carbon fibers are three-dimensionally continuous.

8. A catalyst structure as claimed in claim 6, wherein the fine particles of the noble metal are supported on the carbon fibers through an electroplating.

9. A catalyst structure as claimed in claim 6, wherein the noble metal includes at least Pt.

10. A membrane electrode assembly for a solid polymer fuel cell comprising a solid polymer electrolyte membrane, catalyst layers arranged on both sides of the solid polymer electrolyte membrane, and a diffusing layer arranged on one side of the catalyst layer, **characterized in that** the catalyst layer comprises a catalyst structure as claimed in any of claims 6 to 9 and a polymer electrolyte.

11. A solid polymer fuel cell **characterized by** providing a membrane electrode assembly as claimed in claim 10.

## Patentansprüche

1. Verfahren zur Herstellung von Carbonfasern, das das oxidative Polymerisieren einer Verbindung, die einen aromatischen Ring aufweist, in Gegenwart einer Säure, um ein fibrillenartiges Polymer zu erhalten, und das Brennen des fibrillenartigen Polymers in einer nichtoxidierenden Atmosphäre umfasst.

2. Verfahren zur Herstellung von Carbonfasern nach Anspruch 1, wobei die Verbindung, die den aromatischen Ring aufweist, eine Verbindung ist, die einen Benzolring oder einen aromatischen heterocyclischen Ring aufweist.

3. Verfahren zur Herstellung von Carbonfasern nach Anspruch 2, wobei die Verbindung, die den aromatischen Ring aufweist, mindestes eine Verbindung ist ausgewählt aus der Gruppe bestehend aus Anilin, Pyrrol, Thiophen und Derivaten derselben.

4. Verfahren zur Herstellung von Carbonfasern nach einem der Ansprüche 1 bis 3, wobei die oxidative Polymerisation eine elektrolytische oxidative Polymerisation ist.

5. Verfahren zur Herstellung von Carbonfasern nach einem der Ansprüche 1 bis 4, wobei die Säure mindestens eine ist ausgewählt unter HBF₄, H₂SO₄, HCl und HClO₄.

6. Katalytische Struktur, **gekennzeichnet durch** das Tragen feiner Teilchen eines Edelmetalls auf den Carbonfasern, die **durch** ein Verfahren nach einem der Ansprüche 1 bis 5 hergestellt werden.

7. Katalytische Struktur nach Anspruch 6, wobei die Carbonfasern dreidimensional kontinuierlich sind.

8. Katalytische Struktur nach Anspruch 6, wobei die feinen Teilchen des Edelmetalls auf den Carbonfasern durch eine Elektroplattierung getragen werden.

9. Katalytische Struktur nach Anspruch 6, wobei das Edelmetall mindestens Pt umfasst.

10. Membranelektrodenzusammenbau für eine Festpolymerbrennstoffzelle, umfassend eine Festpolymerelektrolytmembran, Katalysatorschichten, die auf beiden Seiten der Festpolymerelektrolytmembran angeordnet sind, und eine diffundierende Schicht, die auf einer Seite der Katalysatorschicht angeordnet ist, **dadurch gekennzeichnet, dass** die Katalysatorschicht eine Katalysatorstruktur nach einem der Ansprüche 6 bis 9 und einen Polymerelektrolyt umfasst.

11. Festpolymerbrennstoffzelle, **gekennzeichnet durch** Bereitstellen eines Membranelektrodenzusammenbaus nach Anspruch 10.

## Revendications

1. Procédé de production de fibres de carbone qui comprend la polymérisation oxydante d'un composé ayant un cycle aromatique en la présence d'un acide pour obtenir un polymère en forme de fibrille et la chauffe du polymère en forme de fibrille dans une atmosphère non oxydante.

2. Procédé de production de fibres de carbone tel que revendiqué selon la revendication 1, dans lequel le composé ayant le cycle aromatique est un composé ayant un cycle benzénique ou un cycle hétérocyclique aromatique.

3. Procédé de production de fibres de carbone tel que revendiqué selon la revendication 2, dans lequel le composé ayant le cycle aromatique est au moins un composé choisi parmi le groupe constitué de l'aniline, du pyrrole, du thiophène et des dérivés de ceux-ci.

4. Procédé de production de fibres de carbone tel que revendiqué selon l'une quelconque des revendications 1 à 3, dans lequel la polymérisation oxydante est une polymérisation électrolytique oxydante.

5. Procédé de production de fibres de carbone tel que revendiqué selon l'une quelconque des revendications 1 à 4, dans lequel l'acide est au moins un acide choisi parmi HBF₄, H₂SO₄, HCl et HClO₄

6. Structure de catalyseur **caractérisée par** le support de fines particules d'un métal noble sur les fibres de carbone produites selon un procédé tel que revendiqué selon l'une quelconque des revendications 1 à 5.

7. Structure de catalyseur telle que revendiquée selon la revendication 6, dans laquelle les fibres de carbone sont continues dans les trois dimensions.

8. Structure de catalyseur telle que revendiquée selon la revendication 6, dans laquelle les fines particules du métal noble sont supportées sur les fibres de carbone à travers un plaquage électrolytique.

9. Structure de catalyseur telle que revendiquée selon la revendication 6, dans laquelle le métal noble inclut au moins du Pt.

10. Assemblage pour électrode à membrane pour une pile à combustible du type polymère solide comprenant une membrane électrolytique de type polymère solide, des couches de catalyseur disposées sur les deux côtés de la membrane électrolytique de type polymère solide, et une couche de diffusion disposée sur un côté de la couche de catalyseur, **caractérisé en ce que** la couche de catalyseur comprend une structure de catalyseur telle que revendiquée selon l'une quelconque des revendications 6 à 9 et un électrolyte de type polymère.

11. Pile à combustible de type polymère solide, **caractérisée par** la fourniture d'un assemblage pour électrode à membrane tel que revendiqué selon la revendication 10.
